# EUROPÄISCHE PATENTSCHRIFT

(11) **EP 3 366 458 B1**
(45) Veröffentlichungstag und Bekanntmachung des Hinweises auf die Patenterteilung: **07.06.2023**
(21) Anmeldenummer: 17199798.4
(22) Anmeldetag: 02.11.2017
(51) Int. Cl.: B29C 64/379, B29C 64/25, B33Y 40/00, B33Y 30/00, B29C 64/259, B33Y 10/00, B22F 10/20, B22F 12/00, B22F 3/105, H01L 21/677, B23Q 7/14

(54) **TRANSPORTEINHEIT UND BEREITSTELLUNG EINES DREIDIMENSIONALEN BAUTEILS**
TRANSPORT UNIT AND PROVISION OF A THREE-DIMENSIONAL COMPONENT
UNITÉ DE TRANSPORT ET FOURNITURE D'UN COMPOSANT TRIDIMENSIONNEL

(30) Priorität: 15.11.2016 DE 102016121946
(43) Veröffentlichungstag der Anmeldung: 29.08.2018
(73) Patentinhaber: EOS GmbH Electro Optical Systems, 82152 Krailling (DE)
(72) Erfinder: Plachner, Kai, 82216 Maisach (DE)
(74) Vertreter: Beckord & Niedlich Patentanwälte PartG mbB

(56) Entgegenhaltungen:
- EP-B1- 3 393 699
- DE-A1-102006 013 489
- DE-A1-102008 049 341
- DE-A1-102009 036 153
- US-A- 5 364 219

## Beschreibung

Die Erfindung betrifft eine Transporteinheit zum Transportieren eines additiv gefertigten dreidimensionalen Bauteils. Sie betrifft weiterhin ein Bereitstellungssystem für dreidimensionale Bauteile sowie ein Verfahren zur Bereitstellung eines dreidimensionalen Bauteils.

Bei der additiven Fertigung, landläufig auch als "3D-Druck" bekannt, werden dreidimensionale Bauteile auf Basis von computergenerierten Steuerbefehlen hergestellt. Ein besonders prominentes Beispiel für additive Fertigung ist unter dem Namen "Selektives Lasersintern bzw. Laserschmelzen" bekannt. Dabei wird wiederholt eine dünne Schicht eines (pulverförmigen) Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt. Dies erfolgt in der Regel unter Schutzgasatmosphäre.

Nach der Fertigstellung des dreidimensionalen Objekts in der entsprechenden additiven Fertigungsmaschine wird es nach einer Wartezeit dieser Fertigungsmaschine entnommen. Diese Wartezeit dient einer ersten Abkühlung des Bauteils bzw. des es umgebenden Aufbaumaterials, in erster Linie um bei der Entnahme einer Entzündungsgefahr (insbesondere bei metallischen Bauteilen) bzw. einer Beschädigungsgefahr (insbesondere bei Kunststoffbauteilen) vorzubeugen. In der Regel wird das dreidimensionale Objekt Weiterbearbeitungsschritten zugeführt, beispielsweise einer gezielten Abkühlung, einer Entfernung von das dreidimensionale Objekt umgebendem unverfestigten Aufbaumaterial, einer Oberflächenbearbeitung bzw. einer Weiterverarbeitung im Rahmen eines Folge-Herstellungsprozesses (etwa Bohren, Fräsen, Sägen (etwa zur Entfernung von Stützstrukturen zwischen einer (Bau-)Plattform und dem dreidimensionalen Bauteil) etc.).

Das entsprechende dreidimensionale Objekt wird dabei in der Regel nicht als einzelnes Stück aus der additiven Fertigungsmaschine entnommen, sondern beispielsweise innerhalb eines Wechselrahmens (also einer der Fertigungsmaschine entnehmbaren, das dreidimensionale Bauteil enthaltenden Kammer) und/oder auf einer (bzw. verbunden mit einer) das dreidimensionale Bauteil tragenden Plattform (die während der additiven Fertigung als Bauplattform verwendet wurde).

Die WO 2016/075025 A1 offenbart eine Produktionsanlage, die mindestens zwei Bauvorrichtungen, als additive Fertigungsmaschinen, eine Entnahmestation (zur oben erwähnten Entfernung von das dreidimensionale Objekt umgebendem unverfestigten Aufbaumaterial) und eine Nachbearbeitungsstation (zur thermischen bzw. oberflächlich mechanischen Nachbehandlung der dreidimensionalen Bauteile) sowie weitere Komponenten umfasst. Diese Komponenten werden in einer Transportkette mittels eines selbstangetriebenen Transportmittels (hier im Folgenden synonym als Transporteinheit bezeichnet) miteinander verbunden. Die Offenbarung dieser Schrift wird auch als Offenbarung der hier vorgelegten Erfindung verstanden; die hier vorgelegte Erfindung kann daher durch beliebige Merkmale dieser Offenbarung ergänzt und angereichert sein.

Die DE 10 2009 036 153 A1 beschreibt eine Vorrichtung zur generativen Herstellung dreidimensionaler Bauteile, welche nach der Art eines beidseitig offenen Portals ausgebildet ist. An der einen Portalseite können der Vorrichtung Wechselbehälter zugeführt werden und mittels einer umlaufenden Bahn durch das Portal zu einer Wechselbehälterabführeinrichtung transportiert werden. Für den Zu- und Abtransport von Wechselbehältern wird das Portal zu beiden Seiten hin geöffnet, so dass die Wechselbehälter "der Reihe nach" unter dem Portal hindurchgeführt werden. Weitere Vorrichtungen und Verfahren zur generativen Herstellung dreidimensionaler Bauteile sind aus DE 10 2008 049 341 A1 und US 5 364 219 A bekannt.

Aufgabe der vorliegenden Erfindung ist es, eine verbesserte bzw. weitergebildete Transporteinheit bereitzustellen, die bevorzugt insbesondere sicherere und/oder effektivere Transportprozesse gewährleistet. Weiterhin ist es Aufgabe der Erfindung, ein verbessertes Verfahren zur Bereitstellung eines dreidimensionalen Bauteils bereitzustellen, das bevorzugt insbesondere effektiver und weniger zeitintensiv ist als bisher bekannte Verfahren.

Diese Aufgabe wir durch eine Transporteinheit gemäß Anspruch 1 und ein Verfahren gemäß Anspruch 7 gelöst. Weiterbildungen der Erfindung werden in den Unteransprüchen ausgeführt, deren Merkmale, ebenso wie die Merkmale der unten stehenden Beschreibung, auch im Rahmen aller anderen Anspruchskategorien zur Weiterbildung genutzt werden können außer das Gegenteil wird explizit erwähnt.

Entsprechend umfasst eine erfindungsgemäße Transporteinheit der eingangs genannten Art mindestens die folgenden Bestandteile:
a) eine im Wesentlichen gasdicht verschließbare Übergabeschnittstelle für das dreidimensionale Bauteil und/oder ein das dreidimensionale Bauteil enthaltender Behälter und/oder eine das dreidimensionale Bauteil tragende Plattform, welche Übergabeschnittstelle so ausgebildet und angeordnet ist, dass sie mit einer Ausgabeschnittstelle einer additiven Fertigungsmaschine, die das dreidimensionale Bauteil gefertigt hat, im Rahmen einer bestimmungsgemäßen Bauteil-Übergabe zusammenwirkt und bei bestimmungsgemäßer Verbindung zwischen der Übergabeschnittstelle und Ausgabeschnittstelle eine im Wesentlichen gasdichte Verbindung erzeugbar ist. Die Übergabeschnittstelle kann also zur Übergabe geöffnet werden und danach gasdicht verschlossen; es handelt sich in dem Sinne um eine Art Schleuse hin zur Ausgabeschnittstelle der additiven Fertigungsmaschine, welche Ausgabeschnittstelle eine zweite Schleuse bildet bzw. die beiden genannten Schnittstellen bilden gemeinsam ein zusammenwirkendes Schleusensystem, dessen beide Schleusen bevorzugt nur gemeinsam geöffnet und/oder geschlossen werden können, beispielsweise mithilfe eines Sperrmechanismus, der ein Öffnen beider Schleusen nur dann zulässt, wenn sie zueinander in einer Sollposition positioniert sind, in der eine gasdichte Verbindung zwischen den beiden Schleusen gewährleistet ist. Beim Öffnen der beiden Schleusen wird bevorzugt sichergestellt, dass die (Schutzgas-)Atmosphären innerhalb der (Prozesskammer der) additiven Fertigungsmaschine und der Lagerungskammer miteinander kompatibel sind. Dies kann beispielsweise dadurch sichergestellt werden, dass in beiden genannten Kammern die gleiche Schutzgasatmosphäre ausgebildet wird, wie unten noch weitergehend ausgeführt. Auch ein kombiniertes Gassensor- bzw. - überwachungssystem zum Abgleich der Atmosphärenverhältnisse zwischen den beiden genannten Kammern kann hierbei genutzt werden, so dass beispielsweise in einem Regelkreislauf die Atmosphären in den beiden genannten Kammern aufeinander eingestellt bzw. aneinander angepasst werden. Die genannten Schleusen bzw. Schnittstellen können beispielsweise schwenkbare oder verschiebbare Deckel umfassen, die in geschlossenem Zustand umlaufend abgedichtet sind.
b) eine Lagerungskammer zur Lagerung des Bauteils und/oder des Behälters und/oder der Plattform in einem nach außen hin im Wesentlichen gasdicht verschlossenen Zustand. Die Lagerungskammer ist dabei bevorzugt mit der Übergabeschnittstelle versehen, d.h. ein Teil der nach außen weisenden Wandung der Lagerungskammer ist dann durch die Übergabeschnittstelle gebildet. Die Transporteinheit ist weiterhin bevorzugt mit transportunterstützenden Mitteln ausgestattet, also solche Mittel, die einen selbstangetriebenen und/oder fremdangetriebenen Transport der Transporteinheit erleichtern bzw. erlauben. Hierunter zählen insbesondere Räder, Flügel, Rotoren und Antriebsmotoren, aber auch Laufschienen uvm.

Mithilfe der erfindungsgemäßen Transporteinheit ist es möglich, das hergestellte dreidimensionale Bauteil über die beiden Schnittstellen, anders ausgedrückt: das Schleusensystem, von der Prozesskammer in die Lagerungskammer zu überführen ohne dass die Schutzgasatmosphäre aus der Prozesskammer aufgehoben werden müsste. Vielmehr kann die Schutzgasatmosphäre während und/oder vor der Überführung in der Lagerungskammer dauerhaft aufgebaut und/oder gehalten werden.

Daher weist die Transporteinheit erfindungsgemäß weiter eine Bereitstellungseinheit auf, die im Betrieb, insbesondere während eines Transports des Bauteils, innerhalb der Lagerungskammer ein Schutzgas in der Lagerungskammer bereitstellt. Eine Bereitstellungseinheit kann aus mehreren, prinzipiell auch räumlich voneinander getrennten Komponenten, bestehen, beispielsweise den unten weiter ausgeführten.

Allgemeiner ausgedrückt, eine erfindungsgemäße Transporteinheit kann alternativ oder ergänzend zum oben gesagten umfassen:
- einer Lagerungskammer zur Lagerung des Bauteils und/oder eines das dreidimensionale Bauteil enthaltenden Behälters und/oder einer das dreidimensionale Bauteil tragende Plattform und/oder
- den das dreidimensionale Bauteil enthaltenden Behälter. Dies bedeutet, dass statt der Lagerungskammer auch direkt der Behälter, in dem das dreidimensionale Bauteil während der additiven Fertigung gebaut wurde, insbesondere ein Wechselbehälter, statt einer zusätzlichen, den Behälter umgebenden Lagerungskammer als Teil der Transporteinheit verwendet werden kann.

Die Transporteinheit weist erfindungsgemäß eine Bereitstellungseinheit auf, die im Betrieb, insbesondere während eines Transports des Bauteils, innerhalb der Lagerungskammer bzw. dem Behälter ein Schutzgas in der Lagerungskammer bzw. dem Behälter bereitstellt, und/oder einer im Wesentlichen gasdichten Abdichtung des Behälters. Damit ist man für die Herstellung (bzw. Aufrechterhaltung) der Schutzgasatmosphäre in der Transporteinheit nicht auf eine Flutung mit Schutzgas aus der Prozesskammer angewiesen, sondern die Transporteinheit ist in Bezug auf Schutzgasversorgung autark, was den Transport- und vor allem den Überführungsprozess des dreidimensionalen Bauteils aus der Prozesskammer heraus erheblich vereinfacht. Im Rahmen dessen ist es bevorzugt, dass die Bereitstellungseinheit einen während des Transports mitgeführten Gasbehälter für das Schutzgas umfasst. Alternativ oder ergänzend umfasst die Bereitstellungseinheit eine Anschlussschnittstelle zur Zuleitung des Schutzgases in die Transporteinheit, insbesondere in die Lagerungskammer und/oder den Gasbehälter. Im letzteren Falle wird der Gasbehälter über die Anschlussschnittstelle mit Schutzgas befüllt, das dann in der Folge sukzessive in die Lagerungskammer bzw. den Behälter, in dem das dreidimensionale Bauteil hergestellt wurde, abgegeben werden kann, im ersteren Falle wird die Lagerungskammer direkt mit Schutzgas geflutet. Mit anderen Worten: Ein Gasbehälter dient hier als Puffer bzw. Reservoir um mehr und länger Schutzgas in die Lagerungskammer bzw. den Behälter zur Verfügung zu stellen.

Weiter umfasst die Transporteinheit vorzugsweise eine Anzahl von Gassensoren innerhalb der Lagerungskammer zur Messung einer Gaskonzentration bzw. eines Gasdrucks des Schutzgases und/oder anderer Gase in der Lagerungskammer. Andere Gase, deren Konzentration/Druck überwacht werden könnte, sind insbesondere solche Gase, von denen bekannt ist, dass sie mit dem Aufbaumaterial, aus dem das dreidimensionale Teil hergestellt ist, chemisch reaktionsfreudig sind, also insbesondere Sauerstoff. Mithilfe einer Messung aus den Gassensoren kann eine Einführung von Schutzgas in die Lagerungskammer einfacher gesteuert bzw. geregelt werden. Wie oben beschrieben kann eine Steuerung bzw. Regelung auch dazu dienen, gezielt (zum Beispiel schwellenwertbasiert) eine gewünschte Gaskonzentration in der Lagerungskammer herzustellen bzw. zu erzwingen, bevor die oben erwähnten beiden Schleusen gemeinsam geöffnet werden. Gemäß einer vorteilhaften Weiterbildung der erfindungsgemäßen Transporteinheit ist die Lagerungskammer von einem fahrbaren Trägerbereich lösbar ausgebildet. Als "fahrbar" wird in diesem Zusammenhang grundsätzlich jegliche Art der Bewegbarkeit verstanden, also nicht nur die Möglichkeit des Fahrens, sondern auch des Gleitens bzw. des Fliegens. Durch die lösbare Verbindung der Lagerungskammer von einem Trägerbereich, der als Transportmodul der Transporteinheit verstanden werden kann, ist gewährleistet, dass die Lagerungskammer und der Trägerbereich unabhängig voneinander betreibbar sind. So kann der Trägerbereich sukzessive mehrere Lagerungskammern oder gar andere Elemente wie Transportpaletten o.ä. transportieren, während die Lagerungskammer in der Zeit anderswo "geparkt" fest stehend positioniert ist, etwa in Verbindung mit einer additiven Fertigungsmaschine oder anderen Maschinen / Stationen.

Ein offenbartes Bereitstellungssystem für dreidimensionale Bauteile umfasst mindestens eine additive Fertigungsmaschine mit einer Ausgabeschnittstelle und eine erfindungsgemäße Transporteinheit. Die Transporteinheit ist dabei also Teil des Bereitstellungssystems, zu dem auch noch weitere Systemkomponenten gehören können, insbesondere:
a) eine Abkühlstation, insbesondere mit einer mit der Übergabeschnittstelle in funktionale Zusammenwirkung bringbaren ersten Übernahmeschnittstelle,
b) eine Auspackstation, insbesondere mit einer mit der Übergabeschnittstelle in funktionale Zusammenwirkung bringbaren zweiten Übernahmeschnittstelle,
c) eine Vor- und/oder Nachbereitungsstation, ausgebildet zur Vor- und/oder Nachbereitung des das dreidimensionale Bauteil enthaltenden Behälters und/oder der das dreidimensionale Bauteil tragenden Plattform
d) eine Qualitätsprüfstation
e) eine Oberflächenbearbeitungsstation, ausgebildet zur Oberflächenbearbeitung des dreidimensionalen Bauteils, vorzugsweise mit einer mit der Übergabeschnittstelle in funktionale Zusammenwirkung bringbaren dritten Übernahmeschnittstelle,
f) eine Entfernungsstation, ausgebildet zur Entfernung des dreidimensionalen Bauteils von der es tragenden Plattform, vorzugsweise mit einer mit der Übergabeschnittstelle in funktionale Zusammenwirkung bringbaren vierten Übernahmeschnittstelle,
g) ein Versorgungs- und/oder Übergabelager für Materialen und/oder Hilfsmittel zur Durchführung des additiven Herstellungsverfahrens und/oder des dreidimensionalen Objekts,
h) eine Versorgungsstation mit einer Anzahl von Versorgungsanschlüssen an die Transporteinheit, vorzugsweise zur Aufladung mit elektrischer Energie und/oder zur Bereitstellung des Schutzgases.

Weiterhin betrifft die Erfindung ein Verfahren zur Bereitstellung eines dreidimensionalen Bauteils, das mindestens die folgenden Schritte umfasst:
a) Herstellen des dreidimensionalen Bauteils mittels additiver Fertigung, insbesondere pulverbasierter additiver Herstellung, in einer Prozesskammer einer additiven Fertigungsmaschine unter Schutzgasatmosphäre.
b) Entnahme, bevorzugt direkte Entnahme, des dreidimensionalen Bauteils aus der Prozesskammer durch im Wesentlichen kontinuierliches Vorhalten des Bauteils in Schutzgasatmosphäre, vorzugsweise mittels Überführung in einen unter Schutzgasatmosphäre gehaltenen Bereich, insbesondere eine Lagerungskammer, einer beweglichen Transporteinheit gemäß einem der Ansprüche 1 bis 4. Unter einer direkten Entnahme wird insbesondere eine im Wesentlichen unmittelbare Entnahme verstanden, d.h. beispielsweise eine im Wesentlichen abkühlungspausenfreie Entnahme. Aufgrund der erfindungsgemäßen Transporteinheit kann es nämlich erstmals gefahrlos und bedenkenlos gelingen, additiv gefertigte Bauteile unter Umgehung eines Abkühlpause in einer additiven Fertigungsmaschine zu entnehmen, da die Bauteile ja auch während und nach der Entnahme unter Schutzgas gehalten werden und somit weder eine Entzündungsgefahr noch eine Gefahr für das Bauteil selbst durch "verfrühte" Entnahme zu erwarten ist. Diese Maßnahme erspart nach derzeitigem Stand mindestens eine halbe Stunde Abkühlzeit in der additiven Fertigungsmaschine, so dass damit automatisch unproduktive Standzeiten der additiven Fertigungsmaschine eliminiert werden.
c) Bereitstellung des Bauteils durch Überführung aus der Transporteinheit in eine Weiterverarbeitungseinheit (die wiederum auch eine weitere additive Fertigungsmaschine umfassen kann) und/oder durch eine Ausgabe aus der Transporteinheit an einen Benutzer.

Als "Schutzgas" wird im Rahmen der Erfindung grundsätzlich jedes Gas bzw. Gasgemisch verstanden, unter dessen Bedingungen das Bauteil und/oder das Aufbaumaterial in der additiven Fertigung im Wesentlichen gefahrlos bearbeitet werden kann. Besonders bevorzugt ist dabei die Verwendung von Stickstoff und/oder Argon als Schutzgas.

Im Rahmen der Erfindung ist es besonders vorteilhaft, weil einfach und logisch durchgängig, wenn in der Prozesskammer und der Lagerungskammer bzw. dem oben erwähnten Behälter im Wesentlichen dasselbe Schutzgas verwendet wird. So wird auch u.a. gewährleistet, dass nicht zwei unterschiedliche Schutzgase miteinander in unerwünschte (zum Beispiel chemische) Wechselwirkungen miteinander geraten. Als "dasselbe Schutzgas" werden zwei Gase bzw. Gasgemische verstanden, deren chemische Zusammensetzung im Wesentlichen gleich ist, die bevorzugt auch noch aus derselben Bezugsquelle stammen und/oder im Wesentlichen dieselbe Temperatur aufweisen. Hierzu kann (beispielsweise auf Basis von Temperaturmessungen des Schutzgases (insbesondere in der Lagerungskammer)) das eingeleitete Schutzgas gezielt temperiert, d.h. beheizt und/oder abgekühlt werden.

Bevorzugt dient die Transporteinheit nicht nur rein dem Abtransport des dreidimensionalen Bauteils (was im Rahmen der Erfindung jedoch durchaus umfasst ist), sondern sie wird im Anschluss an Schritt b) an mindestens eine weitere Systemkomponente eines Bereitstellungssystems als Weiterverarbeitungseinheit übergeben, insbesondere eine Systemkomponente eines erfindungsgemäßen Bereitstellungssystems der oben genannten Art. Mit anderen Worten transportiert die Transporteinheit das dreidimensionale Bauteil also von der additiven Fertigungsmaschine zu mindestens einer weiteren Anlage, in der es in irgendeiner Form weiterbearbeitet werden kann.

Weiterhin ist es bevorzugt, dass die Transporteinheit räumlich getrennt außerhalb der additiven Fertigungsmaschine bewegt wird. Die Transporteinheit ist in diesem Fall also kein Transportmittel innerhalb der additiven Fertigungsmaschine, sondern räumlich unabhängig von ihr bewegbar.

Einen besonderen Vorteil entfaltet die Erfindung, wenn das dreidimensionale Bauteil aus einem Aufbaumaterial hergestellt wird, das im Wesentlichen eine Anzahl Polymere und/oder eine Anzahl Metalle umfasst. Wie bereits oben skizziert, ergeben sich bei der direkten Entnahme von additiv hergestellten dreidimensionalen Bauteilen gemäß bisherigem Stand der Technik die Gefahren der Entzündbarkeit bei metallischen Aufbaumaterialien und der unerwünschten chemischen Veränderungen bei Kunststoff-Aufbaumaterialien. Als "im Wesentlichen umfassen" wird hier verstanden, wenn das Aufbaumaterial zu mehr als 50 Volumenprozent, bevorzugt mehr als 80 Volumenprozent, besonders bevorzugt mehr als 90 Volumenprozent der oben angegebenen Stoffklassen enthält.

Eine Weiterbildung der Erfindung besteht darin, dass die Transporteinheit mittels einer Versorgungsstation mit einer Anzahl von Versorgungsanschlüssen versorgt wird, beispielsweise zur Aufladung mit elektrischer Energie und/oder zur Bereitstellung des Schutzgases. Die Versorgungsstation kann mit einer Komponente des erfindungsgemäßen Bereitstellungssystems und/oder mit der additiven Fertigungsmaschine verbunden oder angrenzend an sie lokalisiert sein; sie kann aber auch eine für sich stehende Einheit sein, die zum Beispiel als eine Komponente (s.o.) des erfindungsgemäßen Bereitstellungssystems realisiert sein kann.

Im Folgenden wird die Erfindung anhand eines Ausführungsbeispiels entlang der Figuren ausführlicher beschrieben. Die Figuren sind nicht zwingend als maßstäblich zu verstehen Es zeigen:
- Fig. 1: ein Ausführungsbeispiel eines offenbarten Bereitstellungssystems in einer Ansicht von oben, teilweise mit schematischen Blockdarstellungen, teilweise mit realistisch angelehnten Darstellungen von Komponenten,
- Fig. 2: eine perspektivische Seitenansicht der Versorgungsstation aus Fig. 1,
- Fig. 3: eine perspektivische Seitenansicht der Vor- bzw. Nachbereitungsstation aus Fig. 1,
- Fig. 4: eine perspektivische Seitenansicht einer der additiven Fertigungsmaschinen aus Fig. 1,
- Fig. 5: eine perspektivische Seitenansicht der Auspackstation aus Fig. 1,
- Fig. 6a u. 6b: zwei perspektivische Seitenansichten der Lagerungskammer aus Fig. 1., in geöffnetem Zustand unter Weglassen der äußeren Umhüllung (Fig. 6a) und in geschlossenem Zustand mitsamt der äußeren Umhüllung,
- Fig. 7: eine perspektivische Seitenansicht der Transporteinheit gemäß Fig. 1.

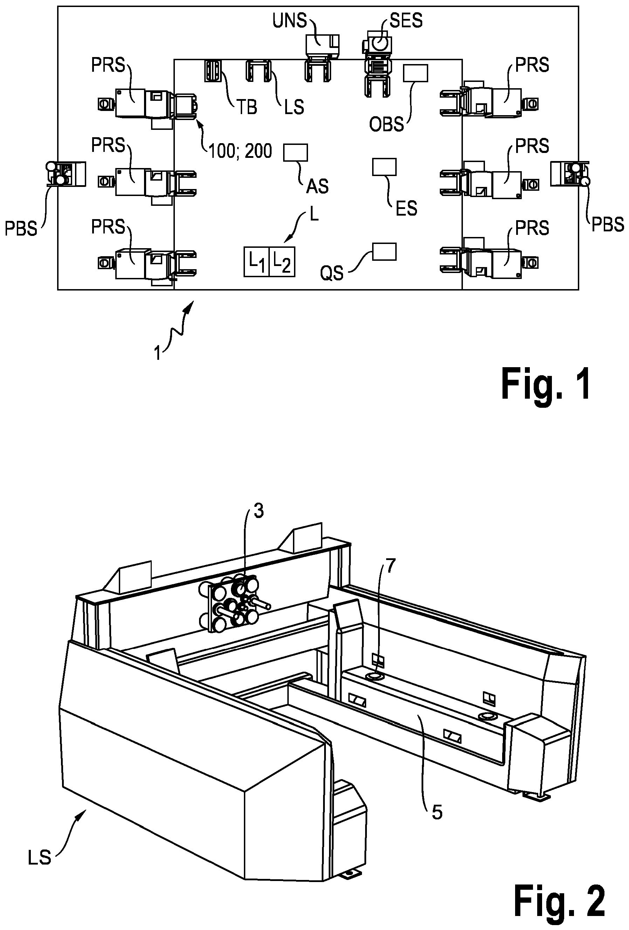

Fig. 1 zeigt ein Ausführungsbeispiel eines erfindungsgemäßen Bereitstellungssystems 1 mit zahlreichen Komponenten: Gezeigt sind sechs additive Fertigungsmaschinen PRS, eine Abkühlstation AS, eine Versorgungsstation LS, ein fahrbarer Trägerbereich TB für eine erfindungsgemäße Transporteinheit, eine Vor- bzw. Nachbereitungsstation SES, eine Auspackstation UNS, zwei Materialbereitstellungsstationen, hier Pulverbereitstellungsstationen PBS, eine Oberflächenbearbeitungsstation OBS, eine Qualitätsprüfstation QS, eine Entfernungsstation ES sowie ein Versorgungs- und/oder Übergabelager L, das sich in einen Versorgungsbereich L₁ und einen Übergabebereich L₂ unterteilt, sowie eine erfindungsgemäße Transporteinheit 200 mit einer Lagerungskammer 100.

Fig. 2 zeigt die Versorgungsstation LS detaillierter. Sie weist neben einer Führung 5, über die die erfindungsgemäße Transporteinheit in eine Zielposition geführt werden kann, eine Versorgungskupplung 3 auf, mittels derer die Transporteinheit mit Schutzgas versorgt werden kann. Das Erreichen der bestimmungsgemäßen Zielposition durch die Transporteinheit wird durch Verrastung in vier Ziel-Verrastungsbereichen 7 (davon hier zwei sichtbar) erreicht. Unterhalb der Versorgungsstation kann eine Induktionsmatte vorgesehen sein, die die Transporteinheit bzw. auch nur ihren fahrbaren Trägerbereich TB mit elektrischer Energie auflädt. Andere elektrische Lademechanismen, beispielsweise auf Basis eines Steckersystems zur Herstellung einer galvanischen elektrischen Verbindung u.a., sind ebenfalls möglich.

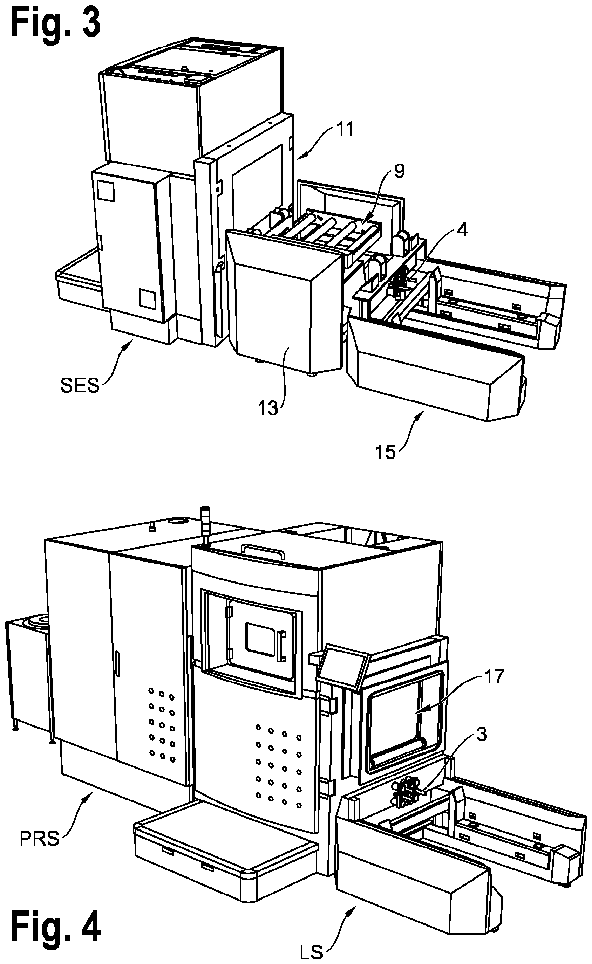

Fig. 3 zeigt die Vor- bzw. Nachbereitungsstation SES, die dazu dient, Wechselbehälter oder (Bau)Plattformen für die additive Fertigung nach einer Fertigung nachzubereiten und für eine erneute Verwendung vorzubereiten. An der Seite ihrer Einlassöffnung 11 weist sie einen Rollenförderer 9 auf einer Drehstation 13 sowie auf der von der Vor- bzw. Nachbereitungsstation SES abgewandten Seite der Drehstation 13 eine Ausrichtstation 15 auf.

Die Ausrichtstation 15 ist im Wesentlichen analog zur Versorgungsstation LS ausgebildet, mit den Unterschied, dass statt der Versorgungskupplung 3 hier nur eine Zentriervorrichtung 4 angebracht ist.

Fig. 4 zeigt die additive Fertigungsmaschine PRS, die über eine Schleuse 17 als Ausgabeschnittstelle gasdicht verschließbar ist. An der Seite der additiven Fertigungsmaschine PRS, an der auch die Schleuse 17 liegt, ist eine Versorgungsstation LS (alternativ eine Ausrichtstation 15) angebracht.

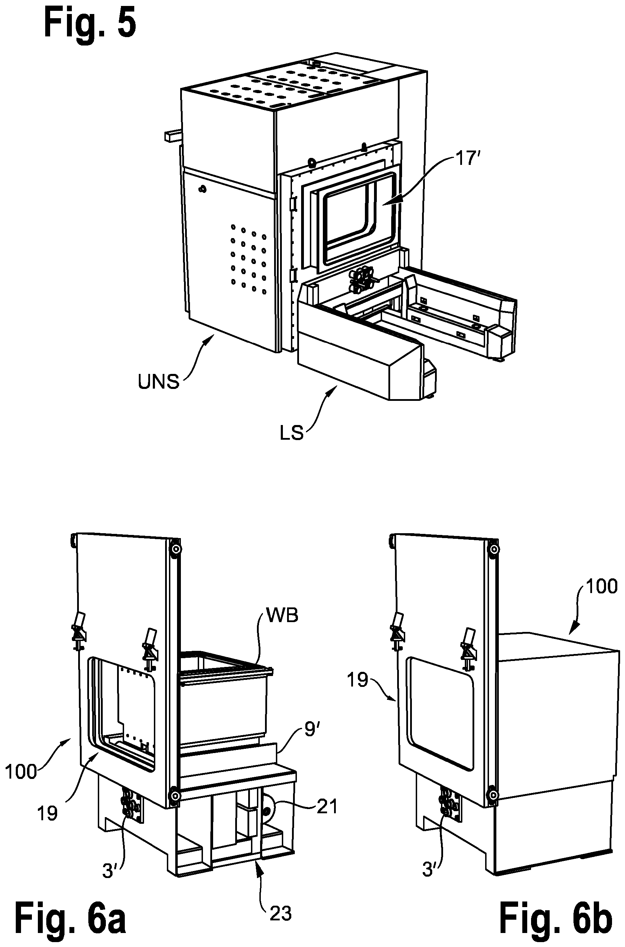

Analog ist in Fig. 5 die Auspackstation UNS gezeigt, ebenfalls mit einer Schleuse 17' und eines Versorgungsstation LS (alternativ einer Ausrichtstation 15) in analoger Anordnung wie bei der additiven Fertigungsmaschine PRS.

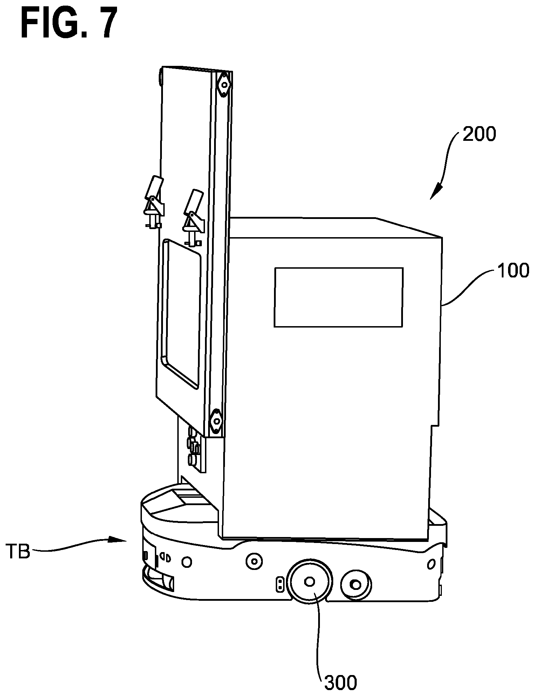

Fig. 6a und 6b zeigen die Lagerungskammer 100 der erfindungsgemäßen Transporteinheit 200. Lagerungskammer 100 und fahrbarer Trägerbereich TB bilden zusammen diese Transporteinheit 200. Hierzu ist der Trägerbereich TB in einen Einfahrbereich unter die Lagerungskammer 100 einfahrbar und dort temporär mit der Lagerungskammer 100 verbindbar, wie in Fig. 7 erkennbar. Dort ist auch erkennbar, dass der fahrbare Trägerbereich TB mit einer Anzahl Rollen 300 ausgestattet ist, die seine Fahrbarkeit gewährleisten.

Die Lagerungskammer 100 umfasst ein Schott 19 mit einer aufblasbaren Dichtung als gasdichte Übernahmeschnittstelle 19, eine Versorgungskupplung 3' als Anschlussschnittstelle 3' als Gegenstück zur oben erwähnten Versorgungskupplung 3, einen Rollenförderer 9` zum Fördern eines Behälters WB (eines Wechselbehälters, der zuvor in der additiven Fertigungsmaschine PRS als Baubehälter genutzt wurde) sowie unterhalb des Rollenförderers 9' einen Raum 23 für Steuerung, Batterie und Pneumatik und einen Gasbehälter 21 für das Schutzgas.

Im Folgenden wird nun ein typischer Ablauf einer additiven Fertigungskette unter Verwendung der beschriebenen Komponenten skizziert. Die additiven Fertigungsanlagen PRS stellen dreidimensionale Bauteile her. Das Material hierzu beziehen sie direkt über Schlauchverbindungen aus den Pulverbereitstellungsstationen PBS. Der fahrbare Trägerbereich TB fährt eine Lagerungskammer 100 an, die angedockt an eine additive Fertigungsanlage PRS bereitgestellt ist. Durch eine gasdichte Verbindung über die Schleuse 17 der additiven Fertigungsanlage PRS und das Schott 19 der Lagerungskammer 100 wird der Wechselbehälter WB mit fertiggestellten dreidimensionalen Bauteilen aus der Prozesskammer der additiven Fertigungsmaschine PRS unter Wahrung der Schutzgasatmosphäre in die Lagerungskammer 100 mittels des Rollenförderers 9' eingefahren. Das Schutzgas in der Lagerungskammer 100 stellt der Gasbehälter 21 bereit. Dadurch kann der Wechselbehälter WB direkt nach Herstellung der dreidimensionalen Bauteile entnommen werden, ohne dass Abkühlzeiten berücksichtigt werden müssten.

Nachdem die Lagerungskammer 100 wieder gasdicht mithilfe des Schotts 19 verschlossen wurde, kann die Transporteinheit 200 von der additiven Fertigungsanlage PRS beispielsweise zum Abkühlen zur Abkühlstation AS oder nach einer Abkühlphase des dreidimensionalen Bauteils innerhalb der Lagerungskammer 100 auch direkt zur Auspackstation UNS gefahren werden, in der der Wechselbehälter WB geleert wird, das heißt das dreidimensionale Bauteil von es umgebendem Aufbaumaterial (Pulver) zumindest grob getrennt wird. Weitere Stationen der Transporteinheit mit dreidimensionalen Bauteilen können dann die Vor- bzw. Nachbereitungsstation SES, die Oberflächenbearbeitungsstation OBS, die Qualitätsprüfstation QS und die Entfernungsstation ES sein. Um zwischenzeitlich elektrische Energie bzw. Schutzgas aufzunehmen, kann die Transporteinheit 200 in die Versorgungsstation LS eingefahren werden. Beispielsweise in Standzeiten kann der fahrbare Trägerbereich TB (der im vorliegenden Beispiel mit Rollen 300 ausgestattet ist) auch das Versorgungs- und/oder Übergabelager L anfahren, beispielsweise um in den Übergabebereich L₂ fertig bearbeitete dreidimensionale Bauteile zu bringen oder aus dem Versorgungsbereich L₁ neues Pulver bzw. neue Plattformen zu holen, die dann an die jeweiligen Komponenten PBS, SES bzw. PRS übergeben werden können. Hierzu ist es nicht zwingend nötig (teilweise evtl. auch eher hinderlich), dass die Lagerungskammer 100 mitgeführt wird. Vielmehr kann der fahrbare Trägerbereich TB ähnlich einer Transportraupe oder einem Gabelstapler so gestaltet sein, dass er beispielsweise Materialpaletten untergreift, anhebt und dann transportiert. Dieser Transport kann durch direkte (manuelle) oder indirekte (über eine Fernkontrolle) menschliche Bedienung erfolgen, er kann aber auch teil- oder vollautomatisch mithilfe eines rechnerbasierten Kontrollsystems durchgeführt werden und sich beispielsweise auch selbstfahrender und autark kontrollierter / gesteuerter Trägerbereiche TB bedienen.

Abschließend sei erwähnt, dass die hier gezeigte Ausführungsform lediglich zur Illustration dient; der Fachmann kann sie problemlos umfangreich modifizieren, Komponenten weglassen oder hinzufügen und erst recht modifizieren. So ist es beispielsweise auch denkbar, statt der Lagerungskammer direkt den Wechselbehälter zu transportieren und an einen Schutzgasanschluss der Transporteinheit 200 anzuschließen. Es sei auch erwähnt, dass als additive Fertigungsmaschinen prinzipiell alle unter Schutzgas operierenden Anlagen in Frage kommen (wobei als Schutzgas im weitesten Sinne auch ein Gas-Unterdruck verstanden wird), bevorzugt jedoch laser- oder elektronenstrahlbasierte selektive (An-)Schmelzverfahren.

Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" "Modul" und "Bauteil" nicht aus, dass diese auch aus mehreren, gegebenenfalls auch räumlich getrennten, Untereinheiten bestehen.

## Patentansprüche

1. Transporteinheit (200) zum Transportieren eines additiv gefertigten dreidimensionalen Bauteils, umfassend:
a) eine im Wesentlichen gasdicht verschließbare Übergabeschnittstelle (19) für das dreidimensionale Bauteil und/oder einen das dreidimensionale Bauteil enthaltenden Behälter (WB) und/oder eine das dreidimensionale Bauteil tragende Plattform, welche Übergabeschnittstelle (19) so ausgebildet und angeordnet ist, dass sie mit einer Ausgabeschnittstelle (17) einer additiven Fertigungsmaschine (PRS), die das dreidimensionale Bauteil gefertigt hat, im Rahmen einer bestimmungsgemäßen Bauteil-Übergabe zusammenwirkt und bei bestimmungsgemäßer Verbindung zwischen der Übergabeschnittstelle (19) und Ausgabeschnittstelle (17) eine im Wesentlichen gasdichte Verbindung erzeugbar ist,
b) eine Lagerungskammer (100) zur Lagerung des Bauteils und/oder des Behälters (WB) und/oder der Plattform in einem nach außen hin im Wesentlichen gasdicht verschlossenen Zustand,
c) eine Bereitstellungseinheit (3, 3`, 21), die im Betrieb, insbesondere während eines Transports des Bauteils, innerhalb der Lagerungskammer (100) und/oder dem Behälter (WB) ein Schutzgas in der Lagerungskammer (100) und/oder dem Behälter (WB) bereitstellt, wobei die Bereitstellungseinheit (3, 3`, 21) eine Anschlussschnittstelle (3`) zur Zuleitung des Schutzgases in die Transporteinheit (200), insbesondere in die Lagerungskammer (100) und/oder den Gasbehälter (21), umfasst.

2. Transporteinheit gemäß Anspruch 1,
mit einer im Wesentlichen gasdichten Abdichtung des Behälters (WB).

3. Transporteinheit gemäß Anspruch 1 oder Anspruch 2,
bei der die Bereitstellungseinheit (3, 3`, 21) einen während des Transports mitgeführten Gasbehälter (21) für das Schutzgas umfasst.

4. Transporteinheit gemäß einem der vorhergehenden Ansprüche,
bei der die Lagerungskammer (100) von einem fahrbaren Trägerbereich (TB) lösbar ausgebildet ist.

5. Bereitstellungssystem (1) für dreidimensionale Bauteile, umfassend
a) mindestens eine additive Fertigungsmaschine (PRS) mit einer Ausgabeschnittstelle (17) und
b) eine Transporteinheit (200) gemäß einem der vorhergehenden Ansprüche.

6. Bereitstellungssystem gemäß Anspruch 5, weiterhin umfassend mindestens eine der folgenden Systemkomponenten:
a) eine Abkühlstation (AS), insbesondere mit einer mit der Übergabeschnittstelle (19) in funktionale Zusammenwirkung bringbaren ersten Übernahmeschnittstelle,
b) eine Auspackstation (UNS), insbesondere mit einer mit der Übergabeschnittstelle (19) in funktionale Zusammenwirkung bringbaren zweiten Übernahmeschnittstelle (17`),
c) eine Vor- und/oder Nachbereitungsstation (SES), ausgebildet zur Vor- und/oder Nachbereitung des das dreidimensionale Bauteil enthaltenden Behälters (WB) und/oder der das dreidimensionale Bauteil tragenden Plattform,
d) eine Qualitätsprüfstation (QS),
e) eine Oberflächenbearbeitungsstation (OBS), ausgebildet zur Oberflächenbearbeitung des dreidimensionalen Bauteils, vorzugsweise mit einer mit der Übergabeschnittstelle (19) in funktionale Zusammenwirkung bringbaren dritten Übernahmeschnittstelle,
f) eine Entfernungsstation (ES), ausgebildet zur Entfernung des dreidimensionalen Bauteils von der es tragenden Plattform, vorzugsweise mit einer mit der Übergabeschnittstelle (19) in funktionale Zusammenwirkung bringbaren vierten Übernahmeschnittstelle,
g) ein Versorgungs- und/oder Übergabelager (L) für Materialen und/oder Hilfsmittel zur Durchführung des additiven Herstellungsverfahrens und/oder für das dreidimensionale Objekt,
h) eine Versorgungsstation (LS) mit einer Anzahl von Versorgungsanschlüssen (3) an die Transporteinheit (200), vorzugsweise zur Aufladung mit elektrischer Energie und/oder zur Bereitstellung des Schutzgases.

7. Verfahren zur Bereitstellung eines dreidimensionalen Bauteils, mindestens umfassend die folgenden Schritte:
a) Herstellen des dreidimensionalen Bauteils mittels additiver Fertigung, insbesondere pulverbasierter additiver Herstellung, in einer Prozesskammer einer additiven Fertigungsmaschine (PRS) unter Schutzgasatmosphäre,
b) Entnahme, bevorzugt direkte Entnahme, des dreidimensionalen Bauteils aus der Prozesskammer durch im Wesentlichen kontinuierliches Vorhalten des Bauteils in Schutzgasatmosphäre mittels Überführung in einen unter Schutzgasatmosphäre gehaltenen Bereich, insbesondere eine Lagerungskammer (100), einer beweglichen Transporteinheit (200) gemäß einem der Ansprüche 1 bis 4,
c) Bereitstellung des Bauteils durch Überführung aus der Transporteinheit (200) in eine Weiterverarbeitungseinheit (UNS, SES, OBS, ES, QS) und/oder durch eine Ausgabe aus der Transporteinheit (200) an einen Benutzer.

8. Verfahren gemäß Anspruch 7,
bei dem die direkte Entnahme aus der Prozesskammer eine im Wesentlichen abkühlungspausenfreie Entnahme umfasst.

9. Verfahren gemäß einem der Ansprüche 7 oder 8,
bei dem als Schutzgas Stickstoff und/oder Argon verwendet wird.

10. Verfahren gemäß einem der Ansprüche 7 bis 9,
bei dem in der Prozesskammer und der Lagerungskammer (100) und/oder dem Behälter (WB) im Wesentlichen dasselbe Schutzgas verwendet wird.

11. Verfahren gemäß einem der Ansprüche 7 bis 10,
bei dem die Transporteinheit (200) im Anschluss an Schritt b) an mindestens eine weitere Systemkomponente eines Bereitstellungssystems (UNS, SES, OBS, ES, QS) als Weiterverarbeitungseinheit (UNS, SES, OBS, ES, QS) übergeben wird, insbesondere eine Systemkomponente (UNS, SES, OBS, ES, QS) eines Bereitstellungssystems (1) gemäß Anspruch 6.

12. Verfahren gemäß einem der Ansprüche 7 bis 11,
bei dem die Transporteinheit (200) räumlich getrennt außerhalb der additiven Fertigungsmaschine (PRS) bewegt wird.

13. Verfahren gemäß einem der Ansprüche 7 bis 12,
bei dem das dreidimensionale Bauteil aus einem Aufbaumaterial hergestellt wird, das im Wesentlichen eine Anzahl Polymere und/oder eine Anzahl Metalle umfasst.

14. Verfahren gemäß einem der Ansprüche 7 bis 13,
bei dem die Transporteinheit (200) mittels einer Versorgungsstation (LS) mit einer Anzahl von Versorgungsanschlüssen (3) versorgt wird, beispielsweise zur Aufladung mit elektrischer Energie und/oder zur Bereitstellung des Schutzgases.

## Claims

1. A transport unit (200) for transporting an additively manufactured three-dimensional component, comprising:
a) a transfer interface (19) which can be closed in a substantially gastight manner for the three-dimensional component and/or a container (WB) containing the three-dimensional component and/or a platform carrying the three-dimensional component, which transfer interface (19) is configured and arranged so that it cooperates with an output interface (17) of an additive manufacturing machine (PRS) which has manufactured the three-dimensional component within the framework of a component transfer as intended and when a connection is made as intended between the transfer interface (19) and output interface (17) a substantially gastight connection can be produced,
b) a storage chamber (100) for storing the component and/or the container (WB) and/or the platform in a substantially gastight sealed state towards the outside.
c) a preparation unit (3, 3`, 21), which during operation, in particular during transport of the component inside the storage chamber (100) and/or the container (WB) prepares a protective gas in the storage chamber (100) and/or the container (WB), wherein the preparation unit comprises a connection interface (3') for supplying the protective gas into the transport unit, in particular into the storage chamber (100) and/or the gas container (WB).

2. The transport unit, in particular according to claim 1,
comprising a substantially gastight seal of the container (WB).

3. The transport unit according to claim 2,
wherein the preparation unit comprises a gas container (21) for the protective gas which is entrained during transport.

4. The transport unit according to one of the preceding claims,
wherein the storage chamber (100) is configured to be detachable from a movable support region (TB).

5. Preparation system (1) for three-dimensional components comprising
a) at least one additive manufacturing machine (PRS) with an output interface (17) and
b) a transport unit (200) according to one of the preceding claims.

6. The preparation system according to claim 5, further comprising at least one of the following system components:
a) a cooling station (AS), in particular with a first takeover interface which can be brought into functional cooperation with the transfer interface (19),
b) an unpacking station (UNS), in particular with a second takeover interface (17') which can be brought into functional cooperation with the transfer interface (19),
c) a pre- and/or post-processing station (SES), configured for pre- and/or post-processing of the container (WB) containing the three-dimensional component and/or the platform bearing the three-dimensional component
d) a quality checking station (QS),
e) a surface processing station (OBS), configured for the surface processing of the three-dimensional component, preferably with a third takeover interface which can be brought into functional cooperation with the transfer interface (19),
f) a removal station (ES), configured for removal of the three-dimensional component from the supporting platform preferably with a fourth takeover interface which can be brought into functional cooperation with the transfer interface (19),
g) a supply and/or transfer store (L) for materials and/or aids for performing the additive manufacturing method and/or for the three-dimensional object,
h) a supply station (LS) with a number of supply connections (3) to the transport unit (200), preferably charging with electrical energy and/or for providing the protective gas.

7. A method for preparing a three-dimensional component, at least comprising the following steps:
a) producing a three-dimensional component by means of additive manufacture, in particular powder-based additive manufacture, in a process chamber of an additive manufacturing machine (PRS) under protective gas atmosphere,
b) removal, preferably direct removal of the three-dimensional component from the process chamber by substantially continuous holding of the component in a protective gas atmosphere, preferably by means of transfer into a region held under protective gas atmosphere, in particular a storage chamber (100) of a moveable transport unit (200), according to one of claims 1 to 4,
c) preparation of the component by transfer from the transport unit (200) into a further processing unit (UNS, SES, OBS, ES, QS) and/or by outputting from the transport unit (200) to a user.

8. The method according to claim 7,
wherein the direct removal from the process chamber comprises a substantially cooling-pause-free removal.

9. The method according to one of claims 7 or 8,
wherein nitrogen and/or argon is used as protective gas.

10. The method according to one of claims 7 to 9,
wherein substantially the same protective gas is used in the process chamber and the storage chamber (100) and/or the container (WB).

11. The method according to one of claims 7 to 10,
wherein following step b) the transport unit (200) is transferred to at least one further system component of a preparation system (UNS, SES, OBS, ES, QS) as a further processing unit (UNS, SES, OBS, ES, QS), in particular a system component (UNS, SES, OBS, ES, QS) of a preparation system (1) according to claim 6.

12. The method according to one of claims 7 to 11,
wherein the transport unit (200) is moved spatially separately outside the additive manufacturing machine (PRS).

13. The method according to one of claims 7 to 12,
wherein the three-dimensional component is made from a construction material which substantially comprises a number of polymers and/or a number of metals.

14. The method according to one of claims 7 to 13,
wherein the transport unit (200) is supplied by means of a supply station (LS) with a number of supply connections (3), for example for charging with electrical energy and/or for preparing the protective gas.

## Revendications

1. Ensemble de transport (200), destiné à transporter un composant tridimensionnel, relevant de la fabrication additive, comprenant :
a) une interface de transfert (19), fermable de manière essentiellement étanche au gaz pour le composant tridimensionnel et/ou un contenant (WB) renfermant le composant tridimensionnel et/ou une plateforme portant le composant tridimensionnel, laquelle interface de transfert (19) est conçue et placée de sorte à coopérer avec une interface de distribution (17) d'une machine de fabrication additive (PRS), qui a fabriqué le composant tridimensionnel, dans le cadre d'un transfert conforme du composant, et de sorte que lors d'une liaison conforme entre l'interface de transfert (19) et l'interface de distribution (17) une liaison essentiellement étanche au gaz puisse être créée,
b) une chambre de stockage (100), destinée à stocker le composant et/ou le contenant (WB) et/ou la plateforme, dans un état fermé de manière essentiellement étanche au gaz,
c) un ensemble de mise à disposition (3, 3`, 21), qui en service, notamment pendant un transport du composant, met à disposition à l'intérieur de la chambre de stockage (100) et/ou du contenant (WB) un gaz protecteur dans la chambre de stockage (100) et/ou le contenant (WB), l'ensemble de mise à disposition comprenant une interface de raccordement (3`) pour l'alimentation du gaz protecteur dans l'ensemble de transport, notamment dans la chambre de stockage (100) et/ou le réservoir à gaz (WB).

2. Ensemble de transport selon la revendication 1,
disposant d'une étanchéification essentiellement étanche au gaz du contenant (WB).

3. Ensemble de transport selon la revendication 2,
dans lequel l'ensemble de mise à disposition comprend un réservoir à gaz (21) pour le gaz protecteur, embarqué pendant le transport.

4. Ensemble de transport selon l'une quelconque des revendications précédentes,
dans lequel la chambre de stockage (100) est conçue de sorte à être désolidarisable d'une zone de support (TB) déplaçable.

5. Système de mise à disposition (1) de composants tridimensionnels, comprenant
a) au moins une machine de fabrication additive (PRS), pourvue d'une interface de distribution (17) et
b) un ensemble de transport (200) selon l'une quelconque des revendications précédentes.

6. Système de mise à disposition selon la revendication 5, comprenant par ailleurs au moins l'un des constituants de système suivants :
a) un poste de refroidissement (AS), pourvu notamment d'une première interface de reprise, susceptible d'être amenée en coopération fonctionnelle avec l'interface de transfert (19),
b) un poste de déballage (UNS), pourvu notamment d'une deuxième interface de reprise (17`), susceptible d'être amenée en coopération fonctionnelle avec l'interface de transfert (19),
c) un poste de préparation et/ou de suivi (SES), conçu pour préparer et/ou pour suivre le contenant (WB) renfermant le composant tridimensionnel et/ou la plateforme portant le composant tridimensionnel,
d) un poste de contrôle qualité (QS),
e) un poste de traitement des surfaces (OBS), conçu pour traiter la surface du composant tridimensionnel, pourvu de préférence d'une troisième interface de reprise, susceptible d'être amenée en coopération fonctionnelle avec l'interface de transfert (19),
f) un poste de retrait (ES), conçu pour retirer le composant tridimensionnel de la plateforme qui le porte, pourvu de préférence d'une quatrième interface de reprise, susceptible d'être amenée en coopération fonctionnelle avec l'interface de transfert (19),
g) un stock d'alimentation et/ou de transfert (L) pour des matières et/ou des agents auxiliaires, destinés à réaliser le procédé de fabrication additive et/ou pour l'objet tridimensionnel,
h) un poste d'alimentation (LS), pourvu d'un nombre de raccords d'alimentation (3) sur l'ensemble de transport (200), de préférence pour la charge en énergie électrique et/ou pour la mise à disposition du gaz protecteur.

7. Procédé, destiné à mettre à disposition un composant tridimensionnel, comprenant au moins les étapes suivantes, consistant à :
a) fabriquer le composant tridimensionnel par voie de fabrication additive, notamment de fabrication additive à base de poudre, dans une chambre de traitement d'une machine de fabrication additive (PRS), sous atmosphère de gaz protecteur,
b) retirer, de préférence retirer directement le composant tridimensionnel de la chambre de traitement, par maintien essentiellement continu du composant sous atmosphère de gaz protecteur, en le faisant passer dans une zone gardée sous atmosphère de gaz protecteur, notamment dans une chambre de stockage (100) d'un ensemble de transport (200) mobile selon l'une quelconque des revendications 1 à 4,
c) mettre à disposition le composant, en le faisant passer de l'ensemble de transport (200) dans un ensemble de traitement ultérieur (UNS, SES, OBS, ES, QS) et/ou en le distribuant hors de l'ensemble de transport (200) à l'attention d'un utilisateur.

8. Procédé selon la revendication 7,
lors duquel le retrait direct hors de la chambre de traitement comprend un retrait essentiellement exempt de pauses de refroidissement.

9. Procédé selon l'une quelconque des revendications 7 ou 8,
lors duquel l'on utilise en tant que gaz protecteur de l'azote et/ou de l'argon.

10. Procédé selon l'une quelconque des revendications 7 à 9,
lors duquel l'on utilise essentiellement le même gaz protecteur dans la chambre de traitement et dans la chambre de stockage (100) et/ou dans le contenant (WB).

11. Procédé selon l'une quelconque des revendications 7 à 10,
lors duquel, à la suite de l'étape b), l'ensemble de transport (200) est transféré à au moins un autre constituant de système d'un système de mise à disposition (UNS, SES, OBS, ES, QS) en tant qu'ensemble de traitement ultérieur (UNS, SES, OBS, ES, QS), notamment à un constituant de système (UNS, SES, OBS, ES, QS) d'un système de mise à disposition (1) selon la revendication 6.

12. Procédé selon l'une quelconque des revendications 7 à 11,
lors duquel l'ensemble de transport (200) est déplacé de manière physiquement séparée à l'extérieur de la machine de fabrication additive (PRS).

13. Procédé selon l'une quelconque des revendications 7 à 12,
lors duquel le composant tridimensionnel est fabriqué en une matière structurelle, qui comprend essentiellement un certain nombre de polymères et/ou un certain nombre de métaux.

14. Procédé selon l'une quelconque des revendications 7 à 13,
lors duquel l'ensemble de transport (200) est alimenté à l'aide d'un poste d'alimentation (LS) pourvu d'un nombre de raccords d'alimentation (3), par exemple pour la charge en énergie électrique et/ou pour la mise à disposition du gaz protecteur.
